Europäisches Patentamt

(19) European Patent Office

Office européen des brevets

(11) Publication number: **0 092 896**
**B1**

(12) **EUROPEAN PATENT SPECIFICATION**

(45) Date of publication of patent specification: **10.09.86**

(51) Int. Cl.⁴: **F 16 D 65/02, F 16 D 55/224**

(21) Application number: **83300759.4**

(22) Date of filing: **16.02.83**

(54) **Disc brakes.**

(30) Priority: **27.03.82 GB 8209092**

(43) Date of publication of application:
**02.11.83 Bulletin 83/44**

(45) Publication of the grant of the patent:
**10.09.86 Bulletin 86/37**

(84) Designated Contracting States:
**DE FR IT**

(56) References cited:
**AT-B- 324 788**
**AT-B- 355 384**
**DE-A-2 834 100**
**DE-A-2 904 792**
**GB-A-1 297 437**

(73) Proprietor: **AUTOMOTIVE PRODUCTS PUBLIC
LIMITED COMPANY**
**Tachbrook Road**
**Leamington Spa Warwickshire CV31 3ER (GB)**

(72) Inventor: **Joynes, Brian**
**14 Cross Fields Road**
**Warwick Warwickshire (GB)**

(74) Representative: **Farrow, Robert Michael**
**Patent Department Automotive Products plc**
**Tachbrook Road**
**Leamington Spa Warwickshire CV31 3ER (GB)**

Courier Press, Leamington Spa, England.

## Description

This invention relates to hydraulically operable disc brakes. .

Disc brakes normally comprise friction pads for engagement with a rotary disc, means for supporting the pads adjacent the disc whilst allowing pad movement towards and away from the disc and an actuator for applying the pads against the disc. The actuator comprises at least one hydraulic cylinder and piston assembly for applying the pads against the disc. When the hydraulic cylinder is depressurised to release the brakes, it is normal practice to arrange for the friction pads to be left close to or just in contact with the disc. Some recent designs of disc brake incorporate a positive retraction means for the piston. A small positive retraction is desirable to reduce rubbing friction and thereby improve fuel economy. A small positive retraction can also prevent irregularities in the running of the disc from knocking back the piston to an undesired extent.

Such retraction has for example been provided by arranging for the main hydraulic seal for the cylinder to be resiliently deformable with brake applying movement of the piston and to retract the piston through a distance controlled by this deformity when the brake is released. The distance through which the piston retracts with such an arrangement is not always sufficiently repeatable and accurate and an object of the present invention is to provide for accurate control of piston retraction.

According to the invention there is provided a disc brake comprising friction pads for engagement with a rotary disc, means for supporting the pads adjacent a disc whilst allowing pad movement towards and away from the disc and an actuator for applying the pads against the disc, the actuator comprising at least one hydraulic cylinder and piston assembly with a main hydraulic seal between the piston and cylinder which also operates as resilient retraction means for the piston, wherein retraction of the piston is controlled by an abutment means, independent of the resilient retraction means, which abutment means grips the piston and operates between a setting stop and retraction stop on the cylinder, the abutment means engaging the setting stop on brake application while the piston continues its brake application movement and then on brake release restricting the piston retraction by engagement with the retraction stop.

Preferably the abutment means is an annular member arranged in an annular groove in the cylinder wall.

The abutment means may comprise an elastomeric portion to grip the piston and a rigid portion for engagement with the axial ends of the groove, which form the stops. The annular groove may be formed by a step at the outer end of the cylinder bore and a rigid annular retainer engaged in the step.

The abutment means may also comprise a dust seal for the cylinder, preferably incorporating a flexible extension between the main body of the abutment means and the retainer. The dust seal may also incorporate a sealing lip engaged with the piston and additional to the elastomeric gripping portion of the abutment means.

Embodiments of the invention will now be described with reference to the accompanying drawings in which:

Figure 1 is a diagrammatic section through a hydraulic disc brake according to the invention;

Figure 2 is a view corresponding to part of Figure 1 showing the piston and part of the cylinder on an enlarged scale and in greater detail; and

Figure 3 illustrate an alternative form of retraction control arrangement.

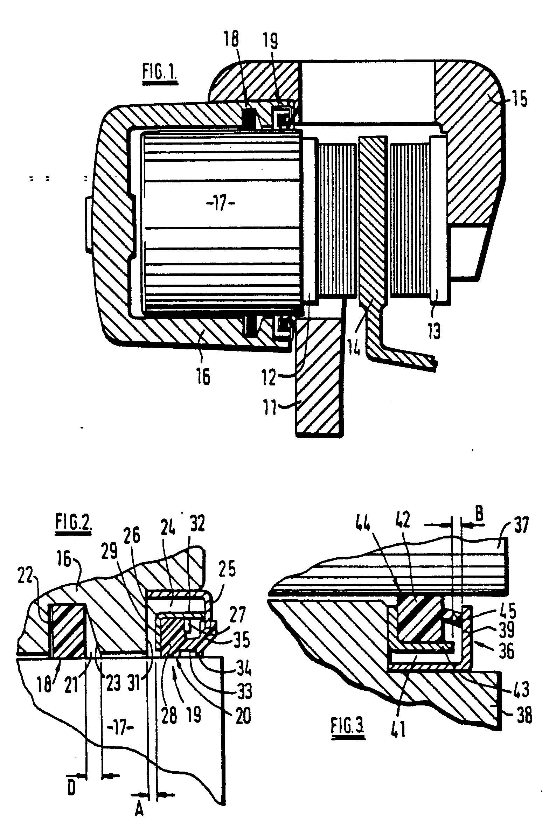

The disc brake shown diagrammatically in Figure 1 incorporates a fixed support 11 which constitutes a means for supporting a pair of friction pads 12 and 13, one to each side of a brake disc 14. Although not shown clearly in the drawing the support 11 extends across the periphery of disc 14 so that it can support both pads 12 and 13.

The brake also incorporates a caliper 15 which is supported for movement axially of the disc on the fixed support 11 by guide means which are not shown. Caliper 15 incorporates at least one hydraulic cylinder 16 within which slides a piston 17. A main hydraulic seal 18 is located in a groove in the cylinder and seals the interface between piston and cylinder against escape of hydraulic fluid. When the interior of cylinder 16 is pressurised, piston 17 bears against friction pad 12 and urges it into frictional engagement with the disc 14. At the same time, the reaction force on the cylinder is transferred through the caliper 15 and thus acts on pad 13 to urge that pad into engagement with the disc 14. Thus the hydraulic cylinder 16, piston 17 and caliper 15 together form an actuator for applying the pads 12 and 13 against the disc 14, resulting in a retardation force on the disc and on any wheel or other rotary member attached thereto. On release of hydraulic pressure from the interior of cylinder 16 the brake applying force is released. As thus far described, the brake is conventional and for that reason the arrangement has been described only briefly.

In accordance with the invention, the piston and cylinder assembly is provided with means for retracting the piston partially into the cylinder when the brake is released and with means for controlling the extent of this retraction. The nature of a main hydraulic seal 18 and of means 19 for controlling the retraction will be described in greater detail with reference to Figure 2. Figure 2 shows the piston 17 arranged within cylinder 16 as in Figure 1. The main hydraulic seal 18 is of rectangular cross-section but is installed within an annular groove 21 of trapezoidal section such that its axial dimension at the piston surface is greater than its axial dimension at the root of the groove by a distance D. The groove has a radial face 22 at the inner edge of the groove and an inclined outer face 23. The arrangement is such that on brake application, the seal distorts into a generally parallelogram configuration to fill the triangular space shown between face 23 and the seal 18. Further movement of the piston causes it to slide through the seal 18 maintaining effective hydraulic sealing and the parallelogram configuration of seal 18. On brake release, the seal tends to recover to its original rectangular shape and it grips the piston sufficiently to tend to draw the piston back into the cylinder. Main hydraulic seal 18 thus acts as a resilient retraction means for the piston.

As previously mentioned, the piston and cylinder assembly is provided with means 19 for controlling the extent of retraction and in particular for restricting the retraction to less than the retraction distance available from the seal 18. The retraction control means 19 is housed within an annular groove in the cylinder wall. In this example, the groove 24 is formed by a step at the outer end of the cylinder bore and a rigid retainer 25 engaged in the step. Retainer 25 is an annular metal pressing having a cylindrical portion which is an interference fit within the step and an inwardly directed flange which defines the outer end of the groove. An annular abutment means 20 within the groove 24 is constituted by an annular pressing 26 secured by bonding and by tabs 27 to an elastomeric inner portion 28 which grips the piston 17. Component 26 constitutes a rigid portion of the abutment means and has an inwardly directed flange 29 for abutment with a retraction stop on the cylinder constituted by the inner face 31 of the groove 24 and also has a cylindrical portion 32 for engagement with a setting stop on the cylinder constituted by the flange of the retainer 25. As seen in the lower part of Figure 2, the abutment means 20 has a clearance A for axial movement within the groove 24.

A flexible extension 33 of the elastomeric moulding incorporating the annular member 28, incorporates an annular lip 34 engaged with the piston and a diaphragm portion 35 engaged with the inner edge of retainer 25, to act as a dust seal for the cylinder.

The operation of the retraction control means will now be described but it should first be explained that the components 33, 34 and 35 are sufficiently flexible to have no effect on the operation as a retraction control means. As the brake is applied, piston 17 is forced outwardly of cylinder 16 and with the rigid portion 26 of the abutment means engaged with the flange of retainer 25, i.e., the setting stop, the piston slides through the elastomeric portion 28 of the abutment means. During this brake application, main hydraulic seal 18 is distorted. Thus on brake release, the main seal 18 provides a resilient retraction force on the piston. The piston retracts through the distance A until abutment means 20 comes into contact with face 31 of the groove, i.e., the retraction stop. The grip of the abutment means on the piston is sufficient to resist the resilient retraction force so that no further retraction occurs. Thus the extent of retraction of the piston is restricted to the distance A. As the brake pads wear, the piston has to move further out of the cylinder during a brake application. This movement is permitted by the piston sliding through the abutment means so that the abutment means takes up a new position on the piston and continues to restrict the retraction to the distance A.

By this means, an accurately controlled retraction of the piston is provided. The pads also tend to take up a position slightly clear of the disc, resulting in free running of the disc. The extent of retraction should be kept sufficiently small to prevent excessive brake travel but should be sufficient to decrease or eliminate brake drag and/or to prevent irregular movement of the disc from knocking the piston back into the cylinder to an uncontrolled extent.

Mainly because the retraction control means incorporates a dust seal and can be located in a position normally occupied by a simple dust seal, but also because the retraction control means is incorporated in the main hydraulic seal, it is possible to incorporate the present invention in a wide range of basic disc brake layouts without altering the fundamental layout design. Thus the invention provides a very simple way of achieving reduction or elimination of brake drag in an existing basic brake design.

Figure 3 shows an alternative means 36 for controlling retraction of a piston 37 within a cylinder 38. An annular step in the end of the cylinder together with a retainer 39 form an annular groove 41. A rectangular section elastomeric portion 42 and a pressing 43 form an abutment means 44 which grips piston 37 and has an axial clearance B within the groove 41 corresponding to clearance A in Figure 2. Retainer 39 acts as a setting stop and the step in the cylinder acts as a retraction stop. A flexible lip 45 moulded integrally with the elastomeric portion 42 provides a dust seal between retainer 39 and abutment means 44 while the engagement of the abutment means with the piston provides a direct seal between piston and abutment means. Operation of the arrangement shown in Figure 3, in conjunction with a suitable main hydraulic seal acting as a resilient retraction means, corresponds to the operation of the Figure 2 embodiment, the lip 45 being sufficiently flexible to have no effect on the retraction control.

**Claims**

1. A disc brake comprising friction pads (13, 14) for engagement with a rotary disc, means (11) for supporting the pads adjacent the disc whilst allowing pad movement towards and away from the disc and an actuator for applying the pads against the disc, the actuator comprising at least one hydraulic cylinder (16 or 38) and piston (17 or 37) assembly with a main hydraulic seal between the piston and cylinder which also operates as resilient retraction means (18) for the piston, characterised in that retraction of the piston is controlled by an abutment means (20 or 44), independent of the resilient retraction means, which abutment means grips the piston and operates between a setting stop (25 or 39) and retraction stop (31) on the cylinder, the abutment means engaging the setting stop on brake application while the piston continues its brake applicaton movement and then on brake release restricting the piston retraction by engagement with the retraction stop.

2. A disc brake as claimed in claim 1 characterised in that the abutment means (20 or 44) is an annular member arranged in an annular groove (24 or 41) in the cylinder wall.

3. A disc brake as claimed in claim 2 characterised in that the abutment means comprises an elastomeric portion (28 or 42) to grip the piston and a rigid portion (26 or 43) for engagement with the axial ends of the groove (24 or 41), which form said stops.

4. A disc brake as claimed in claim 2 or claim 3 characterised in that the annular groove (24 or 41) is formed by a step at the outer end of the cylinder bore and a rigid annular retainer (25 or 39) engaged in the step.

5. A disc brake as claimed in claim 4 characterised in that the abutment means also comprises a dust seal (33, 34, 35; or 45) for the cylinder.

6. A disc brake as claimed in claim 5 characterised in that the dust seal incorporates a flexible extension (33, 35; or 45) between the main body of the abutment means and the retainer.

7. A disc brake as claimed in claim 6 characterised in that the dust seal also incorporates a sealing lip (34) engaged with the piston and additional to the elastomeric gripping portion of the abutment means.

**Patentansprüche**

1. Scheibenbremse mit Bremsklötzen (13, 14) zur Anlage an einer drehbaren Scheibe, einer Einrichtung (11) zum Abstützen der Klötze angrenzend an die Scheibe und gleichzeitigem Zulassen einer Koltzbewegung gegen die und weg von der Scheibe und einem Stellantreib zum Anlegen der Klötze an die Scheibe, wobei der Stellantrieb mindestens einen Hydraulikzylinder (16 oder 18) und eine Kolben (17 oder 37) anordnung mit einer Haupthydraulikdichtung zwischen dem Kolben und dem Zylinder aufweist, die auch als elastische Rückzugeinrichtung (18) für den Kolben arbeitet, dadurch gekennzeichnet, daß der Rückzug des Kolbens durch eine Anschlageinrichtung (20 oder 44) unabhängig von der elastischen Rückzugeinrichtung gesteuert wird, welche Anschlageinrichtung den Kolben ergreift und zwischen einem Einstellanschlag (25 oder 39) und einem Rückzuganschlag (31) an dem Zylinder arbeitet, wobei die Anschlageinrichtung an dem Einstellanschlag beim Bremsenanlegen angreift, während der Kolben seine Bremsenanlegbewegung fortsetzt, und dann beim Bremsenlösen den Kolbenrückzug durch Anlage an dem Rückzuganschlag begrenzt.

2. Scheibenbremse nach Anspruch 1, dadurch gekennzeichnet, daß die Anschlageinrichtung (20 oder 44) ein ringförmiges Teil ist, das in einer ringförmigen Nut (24 oder 41) in der Zylinderwand angeordnet ist.

3. Scheibenbremse nach Anspruch 2, dadurch gekennzeichnet, daß die Anschlageinrichtung einen elastomeren Teil (28 oder 42) zum Ergreifen des Kolbens und einen starren Teil (26 oder 43) zur Anlage an den Axialenden der Nut (24 oder 41) aufweist, welche die Anschläge bilden.

4. Scheibenbremse nach Anspruch 2 oder Anspruch 3, dadurch gekennzeichnet, daß die ringförmige Nut (24 oder 41) durch eine Stufe am äußeren Ende der Zylinderbohrung gebildet wird und ein starrer ringförmiger Halter (25 oder 39) in die Stufe eingesetzt ist.

5. Scheibenbremse nach Anspruch 4, dadurch gekennzeichnet, daß die Anschlageinrichtung auch eine Staubdichtung (33, 34, 35; oder 45) für den Zylinder aufweist.

6. Scheibenbremse nach Anspruch 5, dadurch gekennzeichnet, daß die Staubdichtung eine flexible Verlängerung (33, 35; oder 45) zwischen dem Hauptkörper der Anschlageinrichtung und dem Halter beinhaltet.

7. Scheibenbremse nach Anspruch 6, dadurch gekennzeichnet, daß die Staubdichtung auch eine Dichtlippe (34) beinhaltet, die an den Kolben zusätzlich zu dem elastomeren Greifteil der Anschlageinrichtung angreift.

**Revendications**

1. Frein à disque comprenant des patins de friction (13, 14) pour être en prise avec un disque rotatif, des moyens (11) pour supporter les patins au voisinage du disque tout en permettant un mouvement du patin alternatif par rapport au disque, et un dispositif d'actionnement pour appliquer les patins contre le disque, le dispositif d'actionnement comprenent au moins un ensemble à cylindre hydraulique (16 ou 38) et piston (17 ou 37) avec un joint d'étanchéité hydraulique principal entre le piston et le cylindre qui fonctionne aussi comme un moyen de retrait élastique (18) pour le piston, caractérisé en ce que le retrait du piston est commandé par un dispositif de butée (20 ou 44), indépendamment des moyens de retrait élastique, lequel dispositif de butée accroche le piston et fonctionne entre une butée de fonctionnement (25 ou 39) et une butée de retrait (31) sur le cylindre, le dispositif de butée étant en contact avec la butée de fonctionnement lors d'un freinage alors que le piston continue son mouvement d'application du frein, et, ensuite, lors du relâchement du frein, limitant le retrait du piston par contact avec la butée de retrait.

2. Frein à disque suivant la revendication 1, caractérisé en ce que les dispositifs de butée (20 ou 44) sont constitués par une pièce annulaire disposée dans une rainure annulaire (24 ou 41) dans la paroi du cylindre.

3. Frein à disque suivant la revendication 2, caractérisé en ce que les dispositifs de butée comprennent une partie élastique (28 ou 42) afin d'accrocher le piston et une partie rigide (26 ou 43) pour être en prise avec les extrémités axiales de la rainure (24 ou 41), qui forment lesdites butées.

4. Frein à disque suivant la revendication 2 ou 3, caractérisé en ce que la rainure annulaire (24 ou 41) est formée par un palier à l'extrémité extérieure de l'alésage du cylindre et par une pièce de retenue annulaire rigide (25 ou 39) en prise dans le palier.

5. Frein à disque suivant la revendication 4, caractérisé en ce que les dispositifs de butée comprennent aussi un joint d'étanchéité à la poussière (33, 34, 35; ou 45) pour le cylindre.

6. Frein à disque suivant la revendication 5, caractérisé en ce que le joint d'étanchéité à la poussière comporte un prolongement souple (33, 35; ou 45) entre le corps principal des dispositifs de butée et la pièce de retenue.

7. Frein à disque suivant la revendication 6, caractérisé en ce que le joint d'étanchéité à la poussière comprend aussi une lèvre d'étanchéité (34) en contact avec le piston et s'ajoutant à la partie élastique d'accrochage du dispositif de butée.

FIG.1.

18  19

15

-17-

13

14

16  12

11

FIG.2.

22  16  29  26  24  32

25

27

35

34

33

18  21  23  31  28  19  20

-17-

D

A

44  42  B  37

45

39

36

43

38

41

FIG.3.